# EUROPEAN PATENT SPECIFICATION

(11) **EP 0 867 652 B1**
(45) Date of publication and mention of the grant of the patent: **16.11.2005**
(21) Application number: 98830120.6
(22) Date of filing: 06.03.1998
(51) Int. Cl.: F16L 43/00, F16L 39/00, F16L 41/02

(54) **Pipe fitting consisting of two coaxial elbows for concentric tubes**
Rohranschluss für konzentrische Röhre, der aus zwei koaxialen Rohrbogen besteht
Raccord de tuyaux constitué par deux coudes coaxiaux pour tuyaux concentriques

(30) Priority: 18.03.1997 IT AN970010 U
(43) Date of publication of application: 30.09.1998
(73) Proprietor: LN 2 S.R.L., 62010 Montecassiano MC (IT)
(72) Inventor: Porto, Alberto Rodolfo, Montecassiano (MC) (IT)
(74) Representative: Baldi, Claudio

(56) References cited:
- DE-A- 3 105 406
- DE-C- 19 500 952
- DE-U- 9 015 089
- FR-A- 1 529 813

## Description

This patent application concerns a pair of coaxial elbow pipe fittings for double-lined pipes consisting of two concentric tubes having an annular space between the same.

This type of pipe is used for example in boilers with sealed combustion chamber where the comburent air is drawn through the same duct used to discharge the products of combustion.

This duct in fact consists of two concentric tubes where the combustion gas expelled to the exterior flows through the inner tube while the comburent air flows through the annular space between the two tubes.

In order to connect the two differently inclined rectilinear sections of these pipes, in general couplings are used which must obviously in turn consist of a pair of coaxial elbows which fit respectively on the two concentric tubes of the two pipes. Different fixing systems are currently available to fix the two elbows of the couplings in perfectly coaxial position.

In some cases a pair of opposing screws are used together with spacer inserts fitted and fixed in the space separating the two elbows.

A type of pipe fitting corresponding to the preamble of the claim is described in the German patent DE-A-3105406 which concerns an elbow fitting featuring, on its opposing openings, four outer pins spaced 90° from each other, acting as spacers between the inner elbow and the outer elbow.

In other cases, special fixing brackets consisting of equilateral triangular frames are used which are fitted between the two concentric elbow fittings where the inner elbow fitting is virtually inscribed precisely in the triangular frame which is circumscribed by the outer elbow fitting.

This means that the inner elbow fitting is at a tangent with respect to the frame at the three points coinciding with the centre line of each of its sides, while the outer elbow fitting has three points of contact with the frame at the vertex of the latter.

The elbow fittings are fixed to the centring frame by means of two sets of three screws fitted in the six points of contact as described above.

Both these fixing systems are not very practical in that they require the use and fitting of a high number of screws, four in the first case and six in the second.

With particular reference to the first fixing system, it should be noted that it would not be possible to use a single pair of opposing screws in that this alone would not prevent accidental oscillations of the two elbow fittings with respect to a transverse axis coinciding with the screwing axis of said pair of screws.

The purpose of this invention is to design a new coaxial elbow fitting where the two elbow fittings may be locked in a centred position simply by means of two screws thereby reducing the time required for assembly to a minimum.

The pipe fitting according to the invention includes conventionally an inner and an outer elbow piping fitting having an annular space between the same; the external wall of the inner elbow fitting being provided with a pair of projecting centred and diametrically opposing pins having square cross-section which are housed in centring and locking housings on the inner wall of the external elbow.

Such housings consist in fact of a small relief square platform having two raised sides on its two consecutive sides between which each of the pins projecting from the external wall of the inner elbow fitting are wedged and abut.

The secure fixing between the two elbow fittings in concentric position is achieved by means of a single opposing pair of screws which pass said platform from the exterior to the interior and screw into holes provided at the centre of said square pins.

Although in the model according to the invention, a single opposing pair of screws is used, the above risk involving the possible oscillations of the elbow fittings around a transverse axis coinciding with the screwing axis of the screws does not occur in that the interference between said square pins with the above angular sides prevents even the smallest rotating of the pins in their centring and housing seats.

For major clarity the description of the model according to the invention continues with reference to the enclosed drawings which are intended for purposes of illustration and not in a limiting sense where:
- fig. 1 is an axonometric representation of the pipe fitting according to the invention with the two elbows fitted and centred into each other;
- fig. 2 is an axonometric representation of the only the inner elbow fitting;
- fig. 3 is an axonometric representation of only the outer elbow fitting with a portion of the wall removed in order to show an internal structural detail.

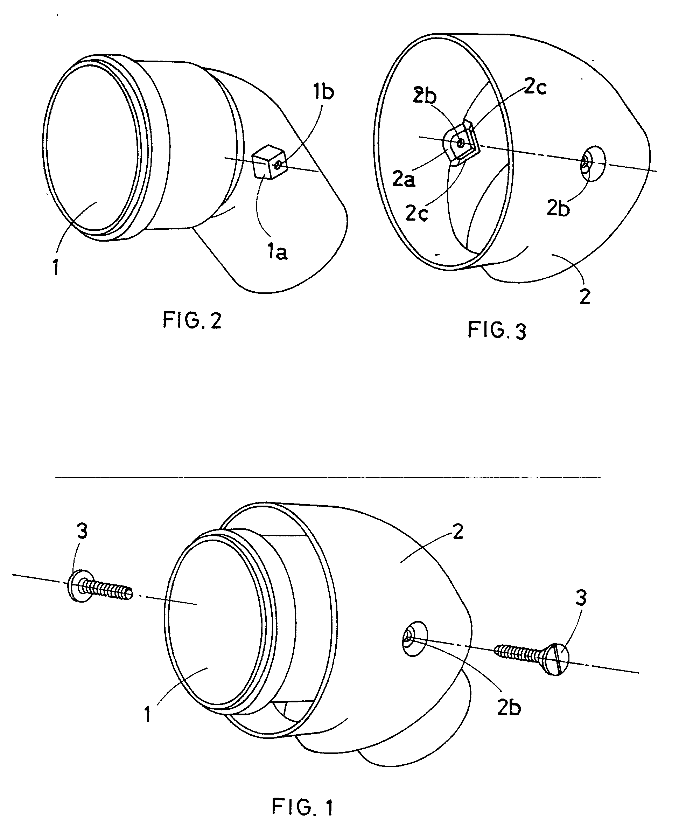

With reference to the above figures, the pipe fitting according to the invention consist of an inner tubular elbow fitting (1) and by an outer tubular elbow fitting (2) having an annular space between the same.

The external wall of the inner elbow fitting (1) being provided with two identical centre projecting pins (1a) placed in diametrically opposing position and realised in a single moulding piece with the elbow fitting (1).

Each of said pins (1a) having square cross-section and an axial hole (1b).

The internal wall of the outer elbow fitting (2) being provided with two small centre platforms (2a) also realised in a single moulding piece with the elbow joint (2) and having a centre hole (2b).

It being provided that from each of said platform (2a) a pair of consecutive sides (2c) delimiting a right angle project towards the interior of the elbow fitting (2).

When elbow fitting (1) is fitted into elbow fitting (2), the pins (1a) of elbow fitting (1) are housed precisely and abut in the pair of walls (2c) of elbow fitting (2).

Once the elbow fitting (1) has been thus centred in elbow fitting (2) the secure fixing of the two elbow fittings is achieved by means of two screws (3) fitted through the holes (2b) of the platform (2) and screwed into holes (1b) of pins (1a).

## Claims

1. A pipe fitting for concentric tube pipes of the type consisting of two coaxial elbow fittings (1, 2) wherein the inner elbow fitting (1) is provided on its external wall with pins (1a) having square cross-section and realised in a single piece with the elbow fitting (1), **characterised in that** said pins (1a) are in the number of two, are provided with an axial hole (1b) and are placed in diametrically opposing position, in the centre of the elbow fitting (1), while the internal wall of the outer elbow fitting (2) is provided with two small centre platforms (2a) realised in a single moulding piece with elbow fitting (2) and having a central hole (2b); each of the two platforms (2a) being provided with a pair of consecutive sides (2c) projecting torwards the interior of the elbow fitting (2) and which delimit a right angle in which the above pins (1a) are housed and abut and in whose holes (1b) screws (3) are fitted from the exterior towards the interior in holes (2b) of the platforms.

## Patentansprüche

1. Anschlussstück für Rohrleitungen mit konzentrischen Rohren, das aus zwei koaxialen Knierohren (1, 2) besteht, wobei das innere Knierohr (1) auf seiner Außenseite Zapfen (1a) mit quadratischem Querschnitt aufweist, die einstückig mit dem Knierohr (1) herausgearbeitet sind, **dadurch gekennzeichnet, dass** die Zapfen (1a) paarig angelegt sind, ein axiales Loch (1b) besitzen und diametral gegenüberliegend in der Mitte des inneren Knierohres (1) angeordnet sind, während auf der Innenwand des äußeren Knierohres (2) zwei kleine, mittlere Plattformen (2a) vorgesehen sind, die als Formteil einstückig mit dem Knierohr (2) herausgearbeitet sind und ein mittleres Loch (2b) aufweisen, wobei vorgesehen ist, dass aus jeder Plattform (2a) ins Innere des Knierohres (2) ein Paar aufeinanderfolgende Zwischenstücke (2c) hervorstehen, die einen rechten Winkel bilden, in dem die besagten Zapfen (1a) ihren exakten Sitz finden und anschlagen, in deren Löcher (1b) Schrauben (3) eingeschraubt werden, die zuvor von außen nach innen in die Löcher (2b) der Plattformen eingesetzt werden.

## Revendications

1. Raccord pour conduit à tubes concentriques, du type formé par deux coudes coaxiaux (1, 2) où le coude interne (1) présente à l'extérieur des pivots (1a) de section carrée, réalisés en une seule pièce avec le coude (1), **caractérisé en ce que** les dits pivots (1a) sont au nombre de deux, présentent un trou axial (1b) et résultent placés, en position diamétralement opposée, sur le point central du coude interne (1), tandis que sur la paroi interne du coude externe (2) sont prévues deux petites plates-formes centrales (2a), réalisées en une seule pièce de moulage avec le coude (2), qui présentent un trou central (2b) ; étant prévu qu'une paire de rebords consécutifs (2c) forjette depuis chacune des dites plates-formes (2a) vers l'intérieur du coude (2), la dite paire de rebords délimitant un angle droit, dans lequel sont exactement nichés et en battement les dits pivots (1a), dans les trous (1b) duquel sont vissées les vis (3) préalablement enfilées, de l'extérieur vers l'intérieur, dans les trous (2b) des dites plates-formes.
